# EUROPÄISCHE PATENTANMELDUNG

(11) **EP 2 733 779 A1**
(43) Veröffentlichungstag der Anmeldung: **21.05.2014**
(21) Anmeldenummer: 12193303.0
(22) Anmeldetag: 20.11.2012
(51) Int. Cl.: H01M 10/056, H01M 10/0568, H01M 10/0569

(54) **Elektrolytlösung mit geringem Säuregehalt**

(71) Anmelder: LANXESS Deutschland GmbH, 50569 Köln (DE)
(72) Erfinder: Ebenbeck, Wolfgang, 51373 Leverkusen (DE); Boll, Matthias, 51061 Köln (DE)

(57) **Zusammenfassung**

Die vorliegende Erfindung betrifft ein Verfahrens zur Verminderung des Gesamtsäuregehalts in Lösungen enthaltend Lithiumhexafluorophosphat in organischen Lösungsmitteln, das ohne aufwändige Neutralisations- und Trocknungsoperationen auskommt und konstant niedrige Gesamtsäuregehalte liefert.

## Beschreibung

Die vorliegende Erfindung betrifft ein Verfahren zur Verminderung des Gesamtsäuregehalts von Elektrolytlösungen enthaltend Lithiumhexafluorophosphat in einem organischen Lösungsmittel sowie deren Verwendung in elektrochemischen Speichervorrichtungen.

Die Verbreitung von tragbaren elektronischen Geräten, wie z.B. Laptop und Palmtop-Computern, Mobiltelefonen oder Videokameras und damit auch der Bedarf nach leichten und leistungsfähigen Batterien und Akkumulatoren hat in den letzten Jahren weltweit zugenommen. Hinzu kommt in Zukunft die Ausrüstung von Elektrofahrzeugen mit derartigen Akkumulatoren und Batterien.

Lithiumhexafluorophosphat (LiPF₆) hat insbesondere als Leitsalz in der Herstellung von leistungsfähigen Akkumulatoren eine hohe industrielle Bedeutung erlangt. Seit den frühen neunziger Jahren werden wieder aufladbare Lithiumionenakkumulatoren kommerziell angeboten. Lithiumhexafluorophosphat stellt jedoch eine extrem hydrolyseempfindliche Verbindung mit einer geringen thermischen Stabilität dar, so dass die entsprechenden Lithiumakkumulatoren und auch die Salze aufgrund dieser Eigenschaften nur durch sehr aufwändige und somit auch sehr kostenintensive Verfahren hergestellt werden können. Die entstehenden Hydrolyseprodukte des Lithiumhexafluorophosphats, wie etwa Fluorwasserstoff, verursachen vor allem in Gegenwart von Wasser eine hohe Korrosivität gegenüber einigen im Akkumulator enthaltenen Bauteilen wie etwa der Anode und der Kathode und mindern die Lebensdauer sowie die Leistung von Lithiumionenakkumulatoren daher signifikant. Um die Funktionsfähigkeit und Lebensdauer und damit die Qualität solcher Akkumulatoren sicherzustellen, ist es von besonderer Wichtigkeit, dass die eingesetzten Lithiumverbindungen hochrein sind, einen möglichst geringen Gesamtsäurewert, einen möglichst geringen Wert an Halogeniden sowie einen möglichst geringen Wassergehalt aufweisen. Bei Vorliegen von erhöhten Wassergehalten ist es von besonderer Wichtigkeit, dass die Hydrolyse des Wertprodukts Lithiumhexafluorophosphat weitestgehend unterdrückt wird, um ein Trocknungsverfahren anschließen zu können.

Aus dem Stand der Technik sind zahlreiche Verfahren zur Herstellung von Lösungen enthaltend Lithiumhexafluorophosphat bekannt.

Beispielsweise ist aus US2012141868A1 bekannt, nichtwässrige Elektrolytlösungen für Lithium-Batterien mit Zeolithen zu trocknen ohne Natrium-Ionen auszuwaschen. Die beschriebenen Zeolithe, bei denen 97,5 bis 99,5 mol-% der austauschbaren Kationen durch Lithium ersetzt wurden, erlauben bei der Trocknung einer nichtwässrigen Elektrolytlösung einen Gehalt an Verunreinigungen von 50 ppm und weniger.

Mit dem Ziel ein Verfahren bereitzustellen, mit dessen Hilfe eine Trocknung wasserhaltiger Lithiumsalzlösungen ermöglicht wird, beschreibt W0200059829A1 ein Verfahren indem mindestens eine Lösung mit mindestens einem mit Alkali- oder Erdalkali-Ionen ausgetauschten Zeolithgranulat inkontaktgebracht wird. Solche Granulate sind in DE 19647290A beschrieben.

In FR2761531A wird eine Elektrolytlösung für Batterien und Akkumulatoren mit einem Gehalt an Fluorwasserstoff von unter 30 ppm, in einem Beispiel von 9 ppm beschrieben. Die Elektrolytlösung beinhaltet zumindest eine fluorhaltige Verbindung und ein nichtwässriges Lösungsmittel aus der Gruppe der zyklischen und linearen Carbonate, Ether, Laktone, Nitrile, Ester, Amide sowie deren Mischungen mit einem Alkoholgehalt von unter 50 ppm.

Der Stand der Technik zeigt, dass es technisch sehr aufwändig ist, hohe Reinheiten für Lithiumhexafluorophosphat oder Lösungen davon zu erzielen und insbesondere den Gesamtsäuregehalt, den Gehalt an Halogeniden sowie den Wassergehalt auf niedrige Werte zu vermindern. Mit den bislang bekannten Verfahren zur Herstellung von Lithiumhexafluorophosphat sowie zur Trocknung und/oder der Neutralisation kann folglich nicht jedes Reinheitserfordernis und nicht jeder Gesamtsäuregehalt erfüllt werden.

Demgemäß lag eine Aufgabe der vorliegenden Erfindung in der Bereitstellung eines effizienten Verfahrens zur Herstellung von Lösungen enthaltend Lithiumhexafluorophosphat in organischen Lösungsmitteln mit niedrigem Gesamtsäuregehalt, das ohne aufwändige Neutralisations- und Trocknungsoperationen auskommt und reproduzierbar ist.

Die Lösung der Aufgabe und Gegenstand der vorliegenden Erfindung ist nun ein Verfahren zur Herstellung von Lösungen enthaltend Lithiumhexafluorophosphat in organischem Lösungsmittel dadurch gekennzeichnet, dass eine Lösung enthaltend
a) Lithiumhexafluorophosphat,
b) Säure sowie
c) organisches Lösungsmittel
mit zumindest einer Base ausgewählt aus der Gruppe bestehend aus Erdalkalihydroxyden, Erdalkalihydrogencarbonaten, Erdalkalicarbonaten, Lithiumhydroxyd, Lithiumhydrogencarbonat und Lithiumcarbonat in Kontakt gebracht wird, wobei das organische Lösungsmittel zumindest ein Nitril enthält.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche bzw. Verfahrensparameter umfasst.

Das Inkontaktbringen kann beispielsweise derart erfolgen, dass zunächst eine Lösung enthaltend Lithiumhexafluorophosphat, Säure sowie organisches Lösungsmittel enthaltend zumindest ein Nitril bereitgestellt wird, und diese Lösung dann mit Base in Kontakt gebracht wird.

Die bereitgestellte Lösung enthält Lithiumhexafluorophosphat, Säure sowie ein organisches Lösungsmittel enthaltend zumindest ein Nitril kann erhalten werden, indem Lithiumhexafluorophosphat und Säure direkt mit zumindest einem Nitril oder einem zumindest ein Nitril enthaltendes Lösungsmittel in Lösung gebracht wird.

Alternativ kann Lithiumhexafluorophosphat und Säure zuerst in einem organischen Lösungsmittel in Lösung gebracht oder bereitgestellt werden, das kein Nitril enthält, bevor danach zumindest ein Nitril oder Lösungsmittel zu der Lösung zugegeben wird, das zumindest ein Nitril enthält.

In den vorgenannten Fällen bildet sich Säure typischerweise dadurch dass Lithiumhexafluorophosphat durch Spuren anhaftenden Wassers angegriffen wird und sich dabei Fluorwasserstoff bildet

In einer weiteren Ausführungsform, kann das Inkontaktbringen kann beispielsweise derart erfolgen, dass zunächst eine Lösung enthaltend Lithiumhexafluorophosphat, Säure sowie organisches Lösungsmittel enthaltend kein Nitril bereitgestellt wird, und diese Lösung dann mit Base und zumindest einem Nitril oder zumindest ein Nitril enthaltendem Lösungsmittel Inkontaktgebracht wird.

Da die eingesetzten Basen typischerweise kaum in organischen Lösungsmittel löslich sind erfolgt das Inkotaktbringen durch Zugabe der Lösung zu einer Suspension der Base oder umgekehrt.

In einer weiteren alternativen Ausführungsform kann das Lithiumhexafluorophosphat und Säure enthaltende Gemisch gemeinsam mit Base vorgelegt werden und dann erst mit organischem Lösungsmittel enthaltend ein Nitril oder zuerst mit einem Lösungsmittel enthaltend kein Nitril und dann mit zumindest einem Nitril oder zumindest ein Nitril enthaltendem Lösungsmittel oder zuerst mit zumindest einem Nitril oder zumindest ein Nitril enthaltendem Lösungsmittel und dann mit einem Lösungsmittel enthaltend kein Nitril in Kontakt gebracht werden.

Das Inkontaktbringen der Komponenten erfolgt bevorzugt dadurch, dass die vorgelegte Base mit einer Lösung aus Lithiumhexafluorophosphat und Säure in einem organischen Lösungsmittel enthaltend zumindest ein Nitril in Kontakt gebracht wird.

Ebenso ist jede andere Reihenfolge des Inkontakbringens des Lithiumhexafluorophosphats, der Säure, des organischen Lösungsmittels und der Base zur Durchführung der Erfindung grundsätzlich geeignet.

Wird Lithiumhexafluorophosphat als Feststoff eingesetzt, sollte es einen möglichst geringen Wassergehalt aufweisen. In einer Ausführungsform beträgt er 0 bis 1000 ppm, vorzugsweise 0 bis 200 ppm und besonders bevorzugt 0 bis 100 ppm, typischerweise 10 bis 100 ppm. Wassergehalte werden und wurden, sofern nicht anders angegeben nach dem in den Beispielen bestimmten Verfahren nach Karl-Fischer bestimmt.

Die beispielsweise bereitgestellte Lösung enthaltend Lithiumhexafluorophosphat, Säure und organisches Lösungsmittel kann beispielsweise eine im Handel erhältliche Elektrolytlösung von Lithiumhexafluorophosphat in einem Lösungsmittel enthaltend kein Nitril sein, die hydrolysebedingte Mengen an Fluorwasserstoff enthält.

Alternativ, kann die beispielsweise bereitgestellte Lösung enthaltend Lithiumhexafluorophosphat, Säure und organisches Lösungsmittel erhalten werden, indem ein Reaktionsgemisch enthaltend Lithiumhexafluorophosphat und nicht umgesetztes Lithiumfluorid, das beispielsweise beim Inkontaktbringen von festem Lithiumfluorid mit einem Gas enthaltend Phosphorpentafluorid erhalten wird, mit organischem Lösungsmittel umgesetzt wird.

Die so bereitgestellten oder erhaltenen Lösungen weisen typischerweise einen Gehalt an Lithiumhexafluorophosphat von 0,1 bis 50 Gew.-%, bevorzugt 1 bis 45%, besonders bevorzugt 10 bis 40% auf, wodurch sie insbesondere zu für elektrochemische Speichervorrichtungen geeigneten Elektrolyten weiterverarbeitet werden können.

Die Lösungen enthaltend Lithiumhexafluorophosphat, Säure und organisches Lösungsmittel, ob Nitril enthaltend oder nicht, weisen typischerweise nach Filtration durch einen 200 nm Filter einen Fluoridgehalt von 100 bis 30000 ppm, bevorzugt 100 bis 3000 ppm, bevorzugt 100 bis 1500 ppm und ganz besonders bevorzugt 100 bis 500 ppm auf, die Konzentration anderer Halogenide liegt in der Regel unter 1 ppm.

Unter Fluoridgehalt ist jene Menge an Fluorid zu verstehen, die gemäß Ionenchromatographie bestimmbar ist, als Summe gelöster Fluoride und Fluorwasserstoff. Die detaillierte Durchführung des Verfahrens finden sich in den Beispielen dieser Erfindung.

Die Lösungen enthaltend Lithiumhexafluorophosphat, Säure und organisches Lösungsmittel, ob Nitril enthaltend oder nicht, weisen typischerweise einen hohen Gesamtsäuregehalt von 30 bis 20000 ppm auf.

Unter Säure ist jede Komponente zu verstehen die zum Gesamtsäuregehalt beiträgt. Der Gesamtsäuregehalt wird wie in den Beispielen angegeben ermittelt. Substanzen die einen Beitrag zum Gesamtsäuregehalt leisten sind Substanzen, die in wäßrigen oder nichtwäßrigen Systemen eine Lösung von Bromthymolblau (pKs-Wert 7,10) von blaugrün nach gelb umschlagen lassen. Dazu zählen typischerweise die sauren Hydrolyseprodukte des Lithiumhexafluorophosphat, insbesondere Fluorwasserstoff.

Das erfindungsgemäß eingesetzte Lithiumhexafluorophosphat oder die erfindungsgemäß bereitgestellten Lösungen von Lithiumhexafluorophosphat weisen typischerweise einen Gehalt an Fremdionen von 1 bis 200 ppm, bevorzugt 1 bis 10 ppm und besonders bevorzugt 1 bis 5 ppm auf. Fremdionen sind alle von Lithium, Fluorid und Hexafluorophosphat verschiedenen Ionen, insbesondere Natrium, Kalium, Sulfat und Chlorid.

Lösungsmittel enthaltend zumindest ein Nitril können beispielsweise ein Nitril, eine Kombination aus Nitrilen oder eine Kombination aus zumindest einem Nitril mit zumindest einem Lösungsmittel, das kein Nitril ist, verwendet werden.

Beispiele für geeignete Nitrile sind Acetonitril, Propannitril und Benzonitril. Insbesondere bevorzugt wird Acetonitril eingesetzt.

Beispielsweise beträgt das Molverhältnis von eingesetzten Nitrilen zur vorliegenden Menge an Lithiumionen in der Lösung mindestens 1:1, bevorzugt mindestens 10:1 und besonders bevorzugt mindestens 50:1 und ganz besonders bevorzugt mindestens 100:1.

Sofern Lösungsmittel eingesetzt werden, die kein Nitril sind, werden bevorzugt solche organischen Lösungsmittel eingesetzt, die bei Raumtemperatur flüssig sind und einen Siedepunkt von 300°C oder weniger bei 1013 hPa aufweisen und die weiterhin zumindest ein Sauerstoff und/oder ein Stickstoffatom enthalten.

Bevorzugte organische Lösungsmittel sind dabei solche, die keine Protonen aufweisen, die einen pKs-Wert bei 25°C bezogen auf Wasser oder ein wässriges Vergleichssystem von weniger als 20 aufweisen. Solche Lösungsmittel werden in der Literatur auch als "aprotische" Lösungsmittel bezeichnet.

Beispiele für solche weiteren Lösungsmittel sind bei Raumtemperatur flüssige Ester, organische Carbonate, Ketone, Ether, Säureamide oder Sulfone.

Beispiele für Ether sind Diethylether, Diisopropylether, Methyl-tert.-butylether, Ethylenglycoldimethyl und- diethylether, 1,3-Propandioldimethyl und- diethylether, Dioxan und Tetrahydrofuran.

Beispiele für Ester sind Essigsäuremethyl- und ethylester und Butylacetat oder organische Carbonate wie Dimethylcarbonat (DMC), Diethylcarbonat (DEC) oder Propylencarbonat (PC) oder Ethylencarbonat (EC).

Ein Beispiel für Sulfone ist Sulfolan.

Beispiele für Ketone sind Aceton, Methylethylketon und Acetophenon

Beispiele für Säureamide sind N,N-Dimethylformamid, N,N-Dimethylacetamid, N-Methylformanilid, N-Methylpyrrolidon oder Hexamethylphosphorsäuretriamid.

Beispielsweise enthält das organische Lösungsmittel (Komponente c) 0,1 bis 100 Gew.-%, vorzugsweise 0,5 bis 100 Gew.-%, besonders bevorzugt 5 bis 70 Gew.-%, alternativ 10 bis 100 Gew.-% Acetonitril.

Das erfindungsgemäß bereitgestellte organische Lösungsmittel wird vor seiner Nutzung bevorzugt einem Trocknungsprozess unterzogen, besonders bevorzugt in einem Trocknungsprozess über einem Molekularsieb.

Der Wassergehalt des organischen Lösungsmittels sollte möglichst gering sein. In einer Ausführungsform beträgt er 0 bis 1000 ppm, vorzugsweise 0 bis 200 ppm und besonders bevorzugt 0 bis 100 ppm.

Der Gehalt an Fremdionen des organischen Lösungsmittels sollte möglichst gering sein. In einer Ausführungsform beträgt er 0 bis 500 ppm, vorzugsweise 0 bis 200 ppm, besonders bevorzugt 0 bis 100 ppm und ganz besonders bevorzugt 1 ppm oder weniger.

Die Lösung enthaltend Lithiumhexafluorophosphat, Säure und organisches Lösungsmittel wird mit zumindest einer Base aus der Gruppe der Erdalkalihydroxide, Erdalkalihydrogencarbonate, Erdalkalicarbonate, Lithiumhydroxid, Lithiumhydrogencarbonat und Lithiumcarbonat, bevorzugt Lithiumhydroxid, Lithiumhydrogencarbonat und Lithiumcarbonat, und ganz besonders bevorzugt Lithiumcarbonat in Kontakt gebracht.

Die eingesetzte Base hat beispielsweise einen Reinheitsgrad von 95,0 bis 99,9999 Gew.-% vorzugsweise von 98,0 bis 99,9999 Gew.-% und besonders bevorzugt von 98,5 bis 99,9999 Gew.-% bezogen auf das jeweils wasserfreie Produkt.

Vorzugsweise enthält die Base weiterhin an Fremdkationen, d.h. an Kationen, die nicht Erdalkali- oder Lithium-Ionen sind
1) einen Gehalt von 0 bis 5000 ppm, vorzugsweise 0 bis 200 und besonders bevorzugt 0 bis 5 ppm Natrium in ionischer Form und/oder
2) einen Gehalt von 0 bis 1000 ppm, vorzugsweise 0 bis 10 ppm Kalium in ionischer Form. Weiterhin enthält die Base weiterhin an Fremdanionen, d.h. an Anionen, die nicht Hydroxid-, Hydrogencarbonat- oder Carbonat-Ionen sind:
   i) einen Gehalt von 0 bis 1000 ppm, vorzugsweise 0 bis 10 ppm Sulfat und/oder
   ii) einen Gehalt von 0 bis 1000 ppm, vorzugsweise 0 bis 10 ppm Chlorid,
ebenfalls bezogen auf das wasserfreie Produkt.

Generell gilt, dass die Summe von Base und den vorgenannten Fremdionen 1) bis 4) sowie gegebenenfalls i) und ii) 1000000 ppm bezogen auf das Gesamtgewicht der Base nicht überschreitet.

Die hierin gemachten ppm-Angaben beziehen sich, sofern nicht explizit anders angegeben, generell auf Gewichtsanteile, die Gehalte der genannten Kationen und Anionen werden durch Ionenchromatographie, gemäß Angaben im experimentellen Teil, ermittelt, sofern nicht anders angegeben.

Das Inkontaktbringen der Lösung enthaltend die Komponenten a) bis c) mit Base kann beispielsweise kontinuierlich oder diskontinuierlich erfolgen, bei kontinuierlicher Fahrweise beispielsweise in einem Festbett, bzw. in einem Festtbettreaktor, diskontinuierlich in jedem dem Fachmann für die Umsetzung von Feststoffen mit Lösungen bekannten Reaktor. Das Inkontaktbringen kann erleichtert werden durch Einbringen von Mischenergie z.B. durch statische oder nicht-statische Mischelementen.

Die Temperatur beim Inkontaktbringen kann beispiels- und vorzugsweise vom Gefrierpunkt bis zum Siedepunkt des eingesetzten organischen Lösungsmittels oder seiner niedrigstsiedenden Komponente erfolgen, beispielsweise von -45° bis 80°C, besonders bevorzugt von 10° bis 60°C und besonders bevorzugt von 10° bis 35°C, insbesondere von 16° bis 24°C.

Der Druck beim Inkontaktbringen kann beispielsweise von 100 hPa bis 2 MPa betragen, bevorzugt von 900 hPa bis 1200 hPa, Umgebungsdruck ist besonders bevorzugt.

Vorzugsweise erfolgt das Inkontaktbringen der Lösung enthaltend Lithiumhexafluorophosphat, Säure und organischem Lösungsmittel mit Base für einen Zeitraum von einer Sekunde bis 48 Stunden, bevorzugt von 10 Sekunden bis 2 Stunden.

In einer weiteren Ausführungsform kann im Anschluss an das Inkontaktbringen der Lösungen mit Base ein Inkontaktbringen mit zumindest einem weiteren organischen Lösungsmittel erfolgen.

Das zumindest eine weitere Lösungsmittel kann ebenfalls aus der Gruppe der oben genannten organischen Lösungsmittel sein, bevorzugt ist Ethyl-methylcarbonat. Dies hat den Zweck, dass neben der Trocknung auch ein Lösungsmitteltausch erfolgen kann.

In einer weiteren Ausführungsform wird gleichzeitig und/oder im Anschluss an das Inkontaktbringen der Lösung enthaltend Lithiumhexafluorophosphat mit der Base ein Trocknungsverfahren durchgeführt. Insbesondere bei der Inkontaktbringung mit LiHCO₃ kommt es zur Abspaltung von Wasser, dass nach der Neutralisation entfernt werden sollte.

Erfindungsgemäß werden zur Trocknung bevorzugt Zeolithe als Molekularsiebe eingesetzt. Besonders bevorzugt ist die Verwendung eines Lithiumionen-ausgetauschten, bindemittelfreien Zeolithgranulats welches in DE 19647290A beschrieben ist.

Zeolithe sind kristalline Aluminiumsilikate, die in zahlreichen Modifikationen in der Natur vorkommen, aber auch synthetisch hergestellt werden können. Mehr als 150 verschiedene Zeolithe sind synthetisiert worden, 48 natürlich vorkommende Zeolithe sind bekannt. Die natürlichen Zeolithe werden mineralogisch unter dem Begriff Zeolithgruppe zusammengefasst.-

Die Zusammensetzung der Stoffgruppe Zeolithe ist:

Mⁿ⁺_{x/n}[AlO₂)ₓ⁻(SiO₂)_{y}]·zH₂O

● Der Faktor n ist die Ladung des Kations M und beträgt bevorzugt 1 oder 2.
● M ist bevorzugt ein Kation eines Alkali- oder Erdalkalimetalls. Diese Kationen werden zum elektrischen Ladungsausgleich der negativ geladenen Aluminium-Tertraeder benötigt und nicht in das Haupt-Gitte des Kristalls eingebaut, sondern halten sich in Hohlräumen des Gitters auf- und sind daher auch leicht innerhalb des Gitters beweglich und auch im Nachhinein austauschbar.
● Der Faktur z gibt an, wie viele Wassermoleküle vom Kristall aufgenommen wurden. Zeolithe können Wasser und andere niedermolekulare Stoffe aufnehmen und beim Erhitzen wieder abgeben, ohne dass ihre Kristallstruktur dabei zerstört wird.
● Das molare Verhältnis von SiO₂ zu AlO₂ bzw. x/y in der Summenformel wird als Modul bezeichnet. Es kann aufgrund der Löwenstein-Regel nicht kleiner als 1 werden.

Erfindungsgemäß bevorzugt als Molekülsieb einzusetzende synthetische Zeolithe sind:

| **Zeolith** | **Zusammensetzung der Elementarzelle** |
|---|---|
| Zeolith A | Na₁₂[(AlO₂)₁₂(SiO₂)₁₂]·27 H₂O |
| Zeolith X | Na₈₆[(AlO₂)₈₆(SiO₂)₁₀₆]·264 H₂O |
| Zeolith Y | Na₅₆[(AlO₂)₈₆(SiO₂)₁₃₆]·250 H₂O |
| Zeolith L | K₉[(AlO₂)₉(SiO₂)₂₇]·22 H₂O |
| Mordenit | Na_{8,7}[(AlO₂)₈₆(SiO₂)_{39,3}]·24 H₂O |
| ZSM 5 | Na_{0,3}H_{3,8}[(AlO₂)_{4,1}(SiO₂)_{91,9}] |
| ZSM 11 | Na_{0,1}H_{1,7}[(AlO₂)_{1,8}(SiO₂)_{94,2}] |

Der Wassergehalt der erfindungsgemäß bereitgestellten Lösung sollte möglichst gering sein. In einer Ausführungsform beträgt er 0 bis 500 ppm, vorzugsweise 0 bis 200 ppm und besonders bevorzugt 0 bis 100 ppm und ganz besonders bevorzugt wasserfrei sein. Es ist ganz klar, dass ein möglichst geringer Wassergehalt in allen eingesetzten Feststoffen und allen eingesetzten Lösungsmitteln vorteilhaft ist, um eine Hydrolyse des Wertproduktes Lithiumhexafluorophosphat zu verhindern. Es hat sich jedoch als überraschender Vorteil herausgestellt, dass die erfindungsgemäß hergestellten Lösung auch bei größeren Mengen an Wasser, bevorzugt 3000 ppm und weniger, stabil bleibt.

In einer weiteren Ausführungsform wird durch das erfindungsgemäße Verfahren der Gehalt an Säure bzw. die Gesamtsäure in der Lösung enthaltend die Komponenten a) bis c) um mindestens 95%, bevorzugt um mindestens 99%, besonders bevorzugt 99,9% reduziert.

In einer weiteren Ausführungsform beträgt durch das erfindungsgemäße Verfahren der Gehalt an Säure bzw. der Gesamtsäuregehalt in einer erfindungsgemäß hergestellten Lösung weniger als 8,4 ppm, bevorzugt weniger als 3 ppm, besonders bevorzugt weniger als 1 ppm.

In einer weiteren Ausführungsform beträgt durch das erfindungsgemäße Verfahren der Fluoridgehalt in einer erfindungsgemäß hergestellten Lösung weniger als 12 ppm, vorzugsweise weniger als 8 ppm, und besonders bevorzugt weniger als 1 ppm.

Bislang konnten Lösungen enthaltend Lithiumhexafluorophosphat mit einem so niedrigen Gehalt an Säure bzw. Gesamtsäure, Wasser und Fluorid nach Verfahren des Standes der Technik nicht hergestellt werden.

Deswegen umfasst die Erfindung weiterhin eine Lösung enthaltend Lithiumhexafluorophosphat in einem organischen Lösungsmittel, die enthält:
● 50 ppm oder weniger Gesamtsäure, bevorzugt 25 ppm oder weniger Gesamtsäure und besonders bevorzugt 8,4 ppm oder weniger Gesamtsäure und
● einen Wassergehalt von 50 ppm oder weniger, bevorzugt 25 ppm oder weniger und besonders bevorzugt 10 ppm oder weniger und/oder
● 12 ppm oder weniger Fluorid, bevorzugt 8 ppm oder weniger Fluorid und besonders bevorzugt 1 ppm oder weniger Fluorid.

Die Erfindung betrifft daher weiterhin die Verwendung der erfindungsgemäß hergestellten Lösung als oder zur Herstellung von Elektrolyten für Lithiumakkumulatoren.

Die Erfindung betrifft weiterhin ein Verfahren zur Herstellung von Elektrolyten für Lithiumakkumulatoren dadurch gekennzeichnet, dass es zumindest das Inkontaktbringen der erfindungsgemäß bereitgestellten Lösung mit zumindest einer Base sowie das vorgenannte erfindungsgemäße Verfahren umfasst.

Der Vorteil der Erfindung liegt insbesondere in der effizienten und schnellen Verfahrensweise, der hohen erzielbaren Reinheit, dem verminderten Gesamtsäuregehalt sowie dem verminderten Gehalt an Fluorid der erfindungsgemäß hergestellten Lösung enthaltend Lithiumhexafluorophosphat.

### Beispiele

Im Folgenden sind unter der Angabe "%" immer Gew.-% und unter "ppm" immer "Gew.-ppm" zu verstehen.

"Arbeiten unter Inertgas", oder Inertgas bedeutet, dass der Wasser- und der Sauerstoffgehalt der Atmosphäre unterhalb von 1 ppm liegt.

Bestimmung der Gesamtsäure: In einem Glasgefäß werden unter inerten Bedingungen 0,2 mL Indikatorlösung (50 mg Bromthymolblau in 50 mL wasserfreiem Isopropanol) mit einer 0,01 N Tetrabutylammoniumhydroxidlösung (in wasserfreiem Isopropanol) bis zum Farbumschlag nach blaugrün titriert. Anschließend wird ca. 1000 mg Elektrolytlösung auf 0,1 mg genau eingewogen. Es wird mit 0,01 N Tetrabutylammoniumhydroxidlösung abermals bis zum blaugrünen Farbumschlag titriert, und der Verbrauch an Tetrabutylammoniumhydroxidlösung auf 0,1 mg genau ausgewogen.

Bestimmung des Wasserwertes: Der Wassergehalt wurde, sofern nicht anders angegeben nach dem Verfahren nach Karl-Fischer bestimmt, welches dem Fachmann bekannt ist und zum Beispiel in "Wasserbestimmung durch Karl-Fischer-Titration" von G. Wieland, GIT-Verlag Darmstadt, 1985 beschrieben wird, durch eine Coulombmetrische Titration mit Hilfe eines Titrators (851 KF Titrando der Firma Metrohm) bestimmt.

Bestimmung der Farbzahl: Eine 11 mm Glasrundküvette wird unter inerten Bedingungen mit der zu untersuchenden Lösung gefüllt, verschlossen und sofort bei Raumtemperatur mit einem geeigneten Meßgerät (z. B. Hach-Lange Lico 400) gemessen.

In Bezug auf die im Rahmen der vorliegenden Arbeiten verwendete Ionenchromatographie sei auf die Publikation L. Terborg, S. Nowak, S. Passerini, M. Winter, U. Karst, P.R. Haddad, P.N. Nesterenko, Ion chromatographic determination of hydrolysis products of hexafluorophosphate salts in aqueous solution. Analytica Chimica Acta 714 (2012) 121-126 sowie die darin zitierte Literatur verwiesen.

Die Analytik auf vorliegende Anionen (insbesondere Hexafluorophosphat und Fluorid) wurde per Ionenchromatographie durchgeführt. Dazu werden folgende Geräte und Einstellungen verwendet:
- **Gerätetyp:**: **Dionex ICS 2100**
- Säule:: IonPac AS20 2*250-mm Analytische Kolonne mit Schutzeinrichtung
- Probenvolumen:: 1 µl
- Eluens:: KOH Gradient: 0 min/15 mM, 10 min/15 mM, 13 min/80 mM, 27 min/100 mM, 27,1 min/15 mM, 34 min/15 mM
- Eluens Flussrate:: 0,25 ml/min
- Temperatur:: 30°C
- SRS:: ASRS 300 (2-mm)

In den folgenden Beispielen 1 bis 3 wurde zur Herstellung der Lösung enthaltend Lithiumhexafluorophosphat in organischen Lösungsmitteln ein Gemisch, enthaltend 35,6% Lithiumhexafluorophosphat und 64,4% Lithiumfluorid, eingesetzt. Der Gesamtsäuregehalt sowie der Fluoridgehalt einer Lösung des in allen folgenden Beispielen eingesetzten Gemisches wurden mit den soeben genannten Methoden bestimmt.

20 g des Gemisches enthaltend 35,6% Lithiumhexafluorophosphat und 64,4% Lithiumfluorid wurden zu 30 g gefrorenem Acetonitril (Fluoridgehalt unterhalb der Nachweisgrenze der ionenchromatographichen Messmethode von 1 ppm, Gesamtsäuregehalt unterhalb der Nachweisgrenze von 1 ppm) zugegeben. Dann ließ man auf Raumtemperatur erwärmen und dekantierte vom ungelösten Lithiumfluorid ab.

Die Lösung enthielt laut Ionenchromatographie 2,2% Fluorid und 21 % Lithiumhexafluorophosphat. Die Säure-Base-Titration ergab einen Wert von 10986 ppm Gesamtsäure.

### Beispiel 1: Verminderung des Gesamtsäuregehalts durch Lithiumcarbonat in Gegenwart von wasserhaltigem Acetonitril

Lithiumcarbonat wurde 0,5 Stunden bei 200°C getrocknet und unter Inertgas auf Raumtemperatur abgekühlt. 5,55 g dieses Lithiumcarbonat wurden in 52,5 g getrocknetem Acetonitril vorgelegt, auf etwa -70°C gekühlt und unter Inertgas wieder an den Schmelzpunkt erwärmt. Dann wurden unter Rühren in kleinen Portionen insgesamt 20,7 g des Gemisches enthaltend 35,6% Lithiumhexafluorophosphat und 64,4% Lithiumfluorid zugegeben. Die Suspension wurde etwa zwei Stunden gerührt.

Die Lösung enthielt laut I onenchromatographie 42 ppm Fluorid und 15% Lithiumhexafluorophosphat. Die Säure-Base-Titration ergab einen Wert von 8,3 ppm Gesamtsäure. Der Wassergehalt lag bei 2851,5 ppm.

Die Lösung wurde weitere etwa 18 Stunden bei Raumtemperatur stehen gelassen.

Die Lösung enthielt laut Ionenchromatographie nur noch 7 ppm Fluorid und 15% Lithiumhexafluorophosphat. Die Säure-Base-Titration ergab einen Wert von 8 ppm Gesamtsäure. Der Wassergehalt lag bei 2898,5 ppm. Die Farbzahl der Lösung lag bei 16 Hazen.

### Beispiel 2: Verminderung des Gesamtsäuregehalts durch Lithiumcarbonat in Gegenwart von wasserfreiem Acetonitril und Molekularsieb

Lithiumcarbonat wurde 0,5 Stunden bei 200°C getrocknet und unter Inertgas auf Raumtemperatur abgekühlt. 5,57 g dieses Lithiumcarbonat sowie 5 g Molekularsieb der Firma UOP 3A, vorgeglüht, wurden in 52 g wasserfreiem Acetonitril vorgelegt, auf etwa -70°C gekühlt und unter Inertgas wieder an den Schmelzpunkt erwärmt. Dann wurden unter Rühren in kleinen Portionen insgesamt 20 g eines Gemisches enthaltend 35,6% Lithiumhexafluorophosphat und 64,4% Lithiumfluorid zugegeben. Die Suspension wurde etwa zwei Stunden gerührt.

Die Lösung enthielt laut Ionenchromatographie nur noch 48 ppm Fluorid. Der Wassergehalt lag bei 1015 ppm.

Diese Lösung wurde weitere 18 Stunden bei Raumtemperatur stehen gelassen.

Die Säure-Base-Titration ergab einen Wert an Gesamtsäure unterhalb der Nachweisgrenze von 1 ppm. Der Wassergehalt lag bei 158,6 ppm.

Etwa die Hälfte der Lösung wurde mit weiteren 5,1 g Molekularsieb versetzt.

Die Lösung enthielt laut Ionenchromatographie nur noch 11 ppm Fluorid. Die Säure-Base-Titration ergab einen Wert an Gesamtsäure unterhalb der Nachweisgrenze von 1 ppm. Der Wassergehalt lag bei 9,1 ppm.

### Beispiel 3: Verminderung des Gesamtsäuregehalts durch Lithiumcarbonat in Gegenwart von Acetonitril und Molekularsieb sowie Zugabe von Ethyl-methylcarbonat

20 g des Gemisches enthaltend 35,6% Lithiumhexafluorophosphat und 64,4% Lithiumfluorid wurden zu 30 g gefrorenem Acetonitril zugegeben. Dann ließ man auf Raumtemperatur erwärmen und dekantierte vom ungelösten Lithiumfluorid ab.

Die Lösung enthielt laut Ionenchromatographie 2,2% Fluorid und 21 % Lithiumhexafluorophosphat. Die Säure-Base-Titration ergab einen Wert von 10986 ppm Gesamtsäure.

In die Lösung wurden 5 g Lithiumcarbonat zugegeben und eine Stunde gerührt.

Die Lösung enthielt laut Ionenchromatographie nur noch 7 ppm Fluorid und 19,8% Lithiumhexafluorophosphat. Die Säure-Base-Titration ergab einen Wert von an Gesamtsäure unterhalb der Nachweisgrenze von 1 ppm Gesamtsäure. Der Wassergehalt lag bei 3869 ppm.

Der Lösung wurden 10 g Molsieb 3A, zuvor im Vakuum (10⁻² mbar, 350°C über mehrere Stunden getrocknet, zugegeben. Diese Suspension wurde weitere etwa 18 Stunden stehen gelassen.

Der Wassergehalt der Lösung lag bei 529 ppm.

Es wurden weitere 5 g getrocknetes Lithiumcarbonat und 10 g Molsieb zugegeben und 5 Stunden gerührt.

Der Fluorid-Gehalt lag unterhalb der Nachweisgrenze der ionenchromatographischen Messmethode von 1 ppm. Der Wassergehalt lag bei 8,9 ppm.

Dann wurden 30 g getrocknetes Ethyl-methylcarbonat zu der Lösung zugesetzt und die Suspension über einen 200 nm Filter aus Teflon filtriert.

Der Fluorid-Gehalt lag unterhalb der Nachweisgrenze der ionenchromatographischen Messmethode von 1 ppm. Die Säure-Base-Titration ergab einen Wert an Gesamtsäure unterhalb der Nachweisgrenze von 1 ppm. Der Wassergehalt lag bei 104 ppm. Der Farbwert der erhaltenen Lösung liegt bei 0 Hazen.

Nach einer thermischen Belastung über 3 Stunden bei 50°C ist der Farbwert von 0 Hazen auf nur 38 Hazen gestiegen.

### Beispiel 4: NMR-Spektroskopie und Alterungsversuche

Mittels NMR-Spektroskopie (Gerätenummer: 19F NMR Spektrometer, Bruker/DPX-400) wurde die Zersetzung von Lithiumhexafluorophosphat in verschiedenen Lösungsmitteln und mit verschiedenen Wassergehalten verglichen. Die Veränderung der Zersetzung nach 24 Stunden Alterung wurde untersucht.

In jeweils einem NMR-Röhrchen wurden folgende Substanzen vorgelegt und unmittelbar sowie nach 24 Stunden mittels oben genanntem Gerät vermessen:

| | | | |
|---|---|---|---|
| | 11,8% | | |
| Probe 1: | Lithiumhexafluorophosphat in Dimethylcarbonat | | |
| | 11,8% | 89,4 mg wasserfreies Acetonitril | |
| Probe 2: | Lithiumhexafluorophosphat in Dimethylcarbonat | | |
| | 11,8% | | |
| Probe 3: | Lithiumhexafluorophosphat in Dimethylcarbonat | | 86,3 mg Wasser |
| | 11,8% | | |
| Probe 4: | Lithiumhexafluorophosphat in Dimethylcarbonat | 77,4 mg wasserfreies Acetonitril | 92,6 mg Wasser |

| | | | |
|---|---|---|---|
| Probe 1: Lithiumhexafluorophosphat zeigte nach 24 Stunden keine Zersetzung. Probe 2: Lithiumhexafluorophosphat in wasserfreiem Acetonitril zeigte nach 24 Stunden eine geringfügige Zersetzung und weist einen Fluorwasserstoffgehalt von 0,13% auf. Probe 3: Lithiumhexafluorophosphat zersetzt sich nach 24 Stunden teilweise in Gegenwart von Wasser und weist einen Fluorwasserstoffgehalt von 0,90% auf. Probe 4: Hingegen bleibt Lithiumhexafluorophasphat in Dimethylcarbonat und wasserfreiem Acetonitril in Gegenwart von Wasser nach 24 Stunden im Vergleich zu Probe 3 um 50% stabiler und weist einen Fluorwasserstoffgehalt von 0,59% auf. | | | |

Außerdem wurde mit Lithiumdifluorophosphat noch ein weiteres Zersetzungsprodukt von Lithiumhexafluorophosphat gefunden sowie stöchiometrische Mengen an Flurowasserstoff.

### Gegenbeispiel 1: Verminderung des Gesamtsäuregehalts durch Lithiumcarbonat in Ethyl-methylcarbonat

Lithiumcarbonat wurde 0,5 Stunden bei 200°C getrocknet und unter Inertgas auf Raumtemperatur abgekühlt. 5,57 g dieses Lithiumcarbonat wurde in 52,6 g trockenem Ethyl-methylcarbonat (Wassergehalt laut Hersteller < 10 ppm) vorgelegt. Die Mischung wurde gekühlt, bis das Ethyl-methylcarbonat erstarrt ist. Unter Inertgas wurde die Mischung wieder zum Schmelzpunkt erwärmt. Anschließend wurde unter Rühren in kleinen Portionen insgesamt 20,1 g des Gemisches aus 35,6% Lithiumhexafluorophosphat und 64,4% Lithiumfluorid zugegeben.

Nach Erwärmung auf Raumtemperatur trat eine plötzliche, sehr starke Gasentwicklung auf. Die Lösung wurde ca. 18 Stunden bei Raumtemperatur stehen gelassen.

Die Lösung enthielt laut Ionenchromatographie 1,2% Fluorid und nur 5% Lithiumhexafluorophosphat.

### Gegenbeispiel 2: Verminderung des Säuregehalts durch Lithiumcarbonat in Diethylether

Zu 30 g getrocknetem, gekühltem (-78°C) Diethylether (Wassergehalt laut Hersteller < 50 ppm) wurden 20 g des Gemisches aus 35,6% Lithiumhexafluorophosphat und 64,4% Lithiumfluorid zugegeben.

Die Säure-Base-Titration ergab einen Wert von 12184 ppm Gesamtsäure.

In die Lösung wurden 1,7 g Lithiumcarbonat (0,5 Stunden bei 200°C getrocknet und unter Inertgas auf Raumtemperatur abgekühlt) zugegeben. Es trat eine deutlich sichtbare Gasentwicklung auf.

Die Säure-Base-Titration ergab einen Wert von 14819 ppm Gesamtsäure.

## Patentansprüche

1. Verfahren zur Herstellung von Lösungen enthaltend Lithiumhexafluorophosphat in organischem Lösungsmittel **dadurch gekennzeichnet, dass** eine Lösung enthaltend
a) Lithiumhexafluorophosphat,
b) Säure sowie
c) organisches Lösungsmittel
mit zumindest einer Base ausgewählt aus der Gruppe bestehend aus Erdalkalihydroxyden, Erdalkalihydrogencarbonaten, Erdalkalicarbonaten, Lithiumhydroxyd, Lithiumhydrogencarbonat und Lithiumcarbonat in Kontakt gebracht wird, wobei das organische Lösungsmittel zumindest ein Nitril enthält.

2. Verfahren nach Anspruch 1, **dadurch gekennzeichnet, dass** das Inkontaktbringen derart erfolgt, dass zunächst eine Lösung enthaltend Lithiumhexafluorophosphat, Säure sowie organisches Lösungsmittel enthaltend zumindest ein Nitril bereitgestellt wird, und diese Lösung dann mit Base in Kontakt gebracht wird.

3. Verfahren nach Anspruch 1 oder 2, **dadurch gekennzeichnet, dass** zunächst eine Lösung enthaltend Lithiumhexafluorophosphat, Säure sowie organisches Lösungsmittel enthaltend kein Nitril bereitgestellt wird, und diese Lösung dann mit Base und zumindest einem Nitril oder zumindest ein Nitril enthaltendes Lösungsmittel in Kontakt gebracht wird.

4. Verfahren nach einem der Ansprüche 1 bis 3, **dadurch gekennzeichnet, dass** die Lösungen enthaltend Lithiumhexafluorophosphat, Säure und organisches Lösungsmittel, ob Nitril enthaltend oder nicht, einen Gesamtsäuregehalt von 30 bis 20000 ppm aufweisen.

5. Verfahren nach einem der Ansprüche 1 bis 4, **dadurch gekennzeichnet, dass** das eingesetzte Lithiumhexafluorophosphat oder die bereitgestellten Lösungen von Lithiumhexafluorophosphat einen Gehalt an Fremdionen von 1 bis 200 ppm, bevorzugt 1 bis 10 ppm und besonders bevorzugt 1 bis 5 ppm aufweisen.

6. Verfahren nach einem der Ansprüche 1 bis 5, **dadurch gekennzeichnet, dass** als Nitril Acetonitril eingesetzt wird.

7. Verfahren nach einem der Ansprüche 1 bis 6, **dadurch gekennzeichnet, dass** das Molverhältnis von eingesetzten Nitrilen zur vorliegenden Menge an Lithiumionen in der Lösung mindestens 1:1, bevorzugt mindestens 10:1 und besonders bevorzugt mindestens 50:1 und ganz besonders bevorzugt mindestens 100:1 beträgt.

8. Verfahren nach einem der Ansprüche 1 bis 7, **dadurch gekennzeichnet, dass** die eingesetzte Base einen Reinheitsgrad von 95,0 bis 99,9999 Gew.-% vorzugsweise von 98,0 bis 99,9999 Gew.-% und besonders bevorzugt von 98,5 bis 99,9999 Gew.-% bezogen auf das jeweils wasserfreie Produkt hat.

9. Verfahren nach einem der Ansprüche 1 bis 8, **dadurch gekennzeichnet, dass** es kontinuierlich oder diskontinuierlich durchgeführt wird.

10. Verfahren nach einem der Ansprüche 1 bis 9, **dadurch gekennzeichnet, dass** im Anschluss ein Inkontaktbringen mit zumindest einem weiteren organischen Lösungsmittel, bevorzugt Ethyl-methylcarbonat, erfolgt.

11. Verfahren nach einem der Ansprüche 1 bis 10, **dadurch gekennzeichnet, dass** weiterhin gleichzeitig und/oder nach dem Inkontaktbringen der Lösung enthaltend Lithiumhexafluorophosphat mit der Base ein Trocknungsverfahren mit Zeolithen vorzugsweise Lithiumionen-ausgetauschten, bindemittelfreien Zeolithen durchgeführt wird.

12. Verfahren nach einem der Ansprüche 1 bis 11, **dadurch gekennzeichnet, dass** der Gehalt an Säure bzw. die Gesamtsäure in der Lösung enthaltend die Komponenten a) bis c) durch das Verfahren um mindestens 95%, bevorzugt um mindestens 99%, besonders bevorzugt 99,9% reduziert wird.

13. Lösung enthaltend Lithiumhexafluorophosphat in einem organischen Lösungsmittel, die enthält:
● 50 ppm oder weniger Gesamtsäure, bevorzugt 25 ppm oder weniger Gesamtsäure und besonders bevorzugt 8,4 ppm oder weniger Gesamtsäure und
● einen Wassergehalt von 50 ppm oder weniger, bevorzugt 25 ppm oder weniger und besonders bevorzugt 10 ppm oder weniger und/oder
● 12 ppm oder weniger Fluorid, bevorzugt 8 ppm oder weniger Fluorid und besonders bevorzugt 1 ppm oder weniger Fluorid.

14. Verwendung der Lösungen nach Anspruch 13 als oder zur Herstellung von Elektrolyten für Lithiumakkumulatoren.

15. Verfahren zur Herstellung von Elektrolyten für Lithiumakkumulatoren, **dadurch gekennzeichnet, dass** es zumindest ein Verfahren nach den Ansprüchen 1 bis 12 umfasst.
